(19) **Europäisches Patentamt**

**European Patent Office**

**Office européen des brevets**

(11) **EP 0 440 931 B1**

(12) **EUROPÄISCHE PATENTSCHRIFT**

(45) Veröffentlichungstag und Bekanntmachung des Hinweises auf die Patenterteilung:
**22.01.1997  Patentblatt 1997/04**

(51) Int Cl.$^6$: **G01N 27/90**

(21) Anmeldenummer: **90124060.6**

(22) Anmeldetag: **13.12.1990**

(54) **Wirbelstromprüfgerät**

Eddy-current testing apparatus

Appareil de contrôle à courants de Foucault

(84) Benannte Vertragsstaaten:
**DE FR GB SE**

(30) Priorität: **05.02.1990  DE 4003330**

(43) Veröffentlichungstag der Anmeldung:
**14.08.1991  Patentblatt 1991/33**

(73) Patentinhaber: **Institut Dr. Friedrich Förster Prüfgerätebau GmbH & Co. KG**
**72766 Reutlingen (DE)**

(72) Erfinder:
 • **Besendörfer, Hermann**
   **W-7441 Altenried (DE)**
 • **Stritzke, Günter**
   **W-7413 Gomaringen (DE)**
 • **Haditsch, Franz**
   **W-7410 Reutlingen (DE)**

(74) Vertreter: **Patentanwälte**
**Ruff, Beier, Schöndorf und Mütschele**
**Willy-Brandt-Strasse 28**
**70173 Stuttgart (DE)**

(56) Entgegenhaltungen:
DE-A- 2 530 816          DE-A- 3 404 720
GB-A- 2 014 317          US-A- 3 109 139
US-A- 3 281 667

 • PATENT ABSTRACTS OF JAPAN, Band 8, Nr. 86 (P-269)[1523], 18. April 1984; & JP-A-59 3347 (SUMITOMO KINZOKU KOGYO K.K.) 10-01-1984

**Beschreibung**

Die Erfindung betrifft ein Verfahren zur Wirbelstromprüfung gemäß dem Oberbegriff des Patentanspruchs 1 und ein Wirbelstromprüfgerät mit umlaufendem Rotierkopf und mit Abstandskompensation gemäß dem Oberbegriff des Patentanspruchs 16. Wirbelstromprüfgeräte mit umlaufendem Rotierkopf sind in der zerstörungsfreien Werkstoffprüfung seit langem bekannt. Fast ebenso lange, mindestens aber seit der Einführung von nicht schleifenden Sonden ist der Einsatz mechanischer Stellglieder zur optimalen Zentrierung des Rotierkopfes relativ zum Prüfgut (GB-A-2 014 317) und der Einsatz einer Abstandskompensation bei solchen Geräten bekannt (US-PS 3 281 667, DE-OS 1 773 501). Eine solche Abstandskompensation hatte sich als notwendig erwiesen, da anders eine sinnvolle, fehlertiefenkonforme Auswertung der Fehlersignale, die wegen der unvermeidbaren Abstandsschwankungen starken Empfindlichkeitsänderungen unterworfen sind, nicht mehr möglich gewesen wäre. Man setzte damals als Stellglied steuerbare Verstärker mit einer nicht linearen Steuerkennlinie ein. Diese mußte einen bestimmten Verlauf haben um dem Umstand Rechnung zu tragen, daß das Abstandssignal und die Empfindlichkeitsänderung des Fehlersignales in unterschiedlichen Funktionen vom Sondenabstand abhängig sind. Kompromisse hinsichtlich, der erreichbaren Steuergenauigkeit mußten in Kauf genommen werden. Das Austauschen von Sonden mit unterschiedlichen Kennlinien war problematisch wenn nicht unmöglich. Diese Probleme wurden nur teilweise gelöst durch eine Abstandskompensation mit digitaler Steuerung, bei der ein linear steuerbarer Verstärker eingesetzt wurde und die Verknüpfung der Abstands funktionen durch entsprechend dimensionierte Widerstandsketten erfolgte (DE-OS 2 530 816). Für unterschiedliche Sondenkonstellationen waren unterschiedliche Widerstandsketten erforderlich. Ein wesentlicher Nachteil der bisherigen Praxis besteht jedoch nach wie vor darin, daß für jeden an der Umlaufbahn versetzt angebrachten Prüfkopf eine vollständige Abstandskompensation mit Abstandssonde, Abstandssignalaufbereitung und Netzwerk zum Verknüpfen der Abstandsfunktionen benötigt wird. Das hat seinen Grund darin, daß die Quellen der Abstandsschwankungen, wie Exzentrizität oder Unrundheit des Prüfteiles, sich an einem bestimmten Zeitpunkt für jeden Punkt der Umlaufbahn, demnach für jeden der versetzt angebrachten Prüfköpfe, unterschiedlich auswirken. Da bei Rotierköpfen stets eine Signalübertragung von den rotierenden auf die feststehenden Teile erforderlich ist, wird auch für die Abstandssignale jedes Prüfkopfes ein eigener Übertragungskanal, z. B. in Form eines Rotierübertragers, gebraucht. Bei der Vielzahl der ohnehin benötigten Übertragungskanäle ist dies oft eine schwer erfüllbare Forderung.

Demgegenüber stellt sich die Erfindung die Aufgabe, ein Verfahren und ein Wirbelstromprüfgerät der eingangs definierten Gattung zu schaffen, bei dem die Abstandskompensation mehrerer versetzt an der Umlaufbahn angebrachten Prüfköpfe durch nur eine Abstandssonde ermöglicht wird.

Die Aufgabe wird gelöst durch ein Verfahren gemäß Anspruch 1 bzw. ein Wirbelstromprüfgerät gemäß Anspruch 16.

Bei der Lösung der erfindungsgemäßen Aufgabe ging man davon aus, daß man Verlauf und Lage der Umlaufbahn im Rahmen der geforderten Genauigkeit als konstant ansehen kann und daß ferner bei den schnellen Umlaufgeschwindigkeiten der gebräuchlichen Rotierköpfe sich die Lage des Prüfteiles zur Umlaufbahn innerhalb einer Umdrehung nur unwesentlich ändert. Das macht es möglich und sinnvoll, innerhalb nur einer Umdrehung und mit nur einer Abstands sonde die Geometrie des Prüfteiles zu erfassen und zu speichern sowie in den geeigneten Augenblicken für jeden der vorhandenen Prüfköpfe die passende Information zur Durchführung der Abstandskomponsation ortsrichtig abzurufen. Die erfindungsgemäße Lösung bringt einen um so größeren Vorteil, je höher die Zahl der verwendeten Prüfköpfe ist. Aber schon bei zwei Prüfköpfen ergaben sich durch den Wegfall einer Abstandssonde, einer Signalaufbereitung und eines Übertragungskanales erhebliche Einsparungen. Ist die Zahl der Übertragungskanäle festgelegt, z. B. durch den Einsatz einer vorgegebenen Rotierübertrageranordnung, so wird für jeden die Zahl 1 überschreitenden Prüfkopf ein Übertragungskanal frei, den man mit einem zusätzlichen Prüfkanal belegen kann.

Nach einer Ausgestaltung der Erfindung wird die ortsgerechte Ablage von im Laufe eines Umlaufs abgeleiteten Steuersignalen in eine erste Tabelle in einfacher Weise ermöglicht, indem man in einem Impulsschaltkreis Umfangstaktimpulse herstellt und diese durch einen an der Umlaufbahn angebrachten Impulsgeber synchronisieren läßt. Man kann dann weiter mehrere aufeinander folgende Umfangstaktimpulse zu einem Abtasttakt zusammenfassen und innerhalb der Taktzeit des letzteren das Ablegen und Abrufen der Steuersignale durchführen. Nach einer anderen Ausgestaltung der Erfindung wird das analoge Abstandssignal in einem A/D-Wandler digitalisiert. Mit dem dort gewonnenen digitalen Abstandssignal wird einer zweiten Tabelle ein dem Abstand h unmittelbar entsprechendes digitales Hilfssignal entnommen. Mit dem letzteren wird einer dritten Tabelle ein digitales Steuersignal entnommen, das dann in der obengenannten ersten Tabelle zum späteren ortsgerechten Abrufen abgelegt wird. Einer weiteren Ausgestaltung der Erfindung entsprechend kann man den Ablauf der Abstandskompensation durch einen Mikrocomputer steuern lassen. Wieder eine andere Ausgestaltung der Erfindung sagt aus, daß das Abstandssignal aus der Abstandssonde zunächst in einer gesteuerten Gleichrichtung zu einem Vektorsignal mit zwei Komponenten gleichgerichtet wird, aus dem anschließend in einem Vektorbetragsbilder ein Betragssignal gebildet wird. Den Unteransprüchen und der Beschreibung können noch eine Reihe weiterer vorteilhafter Ausgestaltungen der Erfindung entnommen werden.

In folgenden soll die Erfindung an Hand von einigen Figuren und unter Benutzung eines Anwendungsbeispieles näher erläutert werden. Im einzelnen zeigen:

Figur 1      einen Prüfkopf

Figur 2      eine Fehlersignalkennlinie

Figur 3      eine Abstandssignalkennlinie

Figur 4      ein Blockschaltbild eines Wirbelstromprüfgerätes

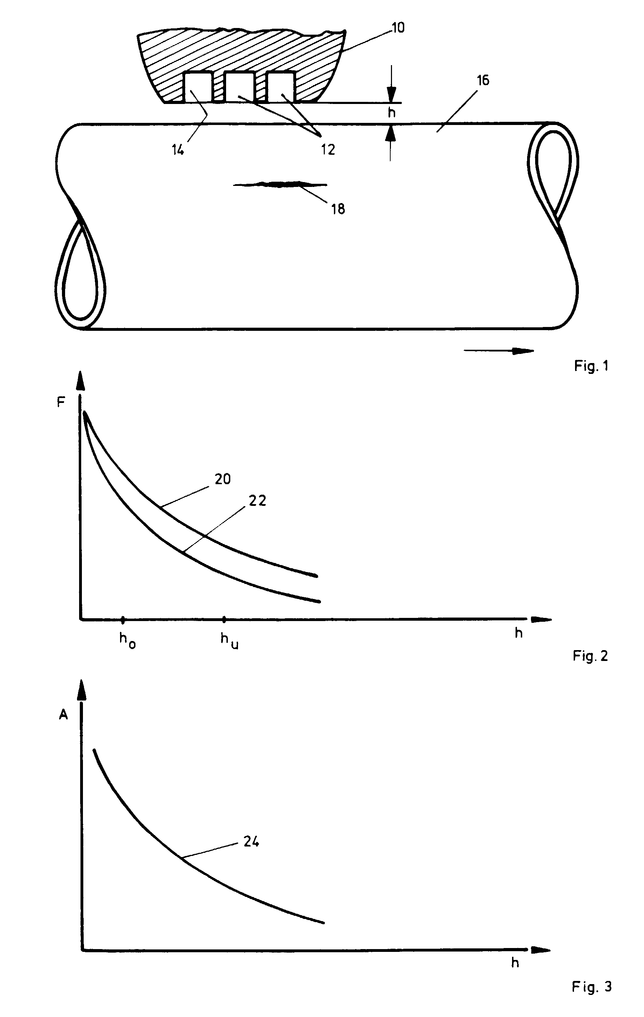

In Figur 1 ist stark vereinfacht ein Schnitt durch einen Teil eines Prüfkopfes 10 dargestellt, der zu einem nicht abgebildeten Rotierkopf eines Wirbelstromprüfgerätes gehört. Der Prüfkopf 10 enthält zwei Fehlersonden 12 und eine Abstandssonde 14, die bei Rotation des Prüfkopfes die Oberfläche eines in Pfeilrichtung bewegten rohrförmigen Prüfteiles 16 im Abstand h abtasten. Abstand h ist nur so lange konstant, wie eine schlagfreie zentrische Führung und ein genau kreisförmiger Querschnitt des Prüfteiles 16 angenommen werden können. In der Praxis müssen Führungsfehler und Formfehler in Kauf genommen werden. Liegt z. B. eine Exzentrizität mit dem Wert a vor, so ändert sich der Abstand h nach einer Sinusfunktion mit dem Betrag a. Die von einem Fehler 18 in den Sonden 12 abgeleiteten Fehlersignale sind den Abstandsschwankungen entsprechenden Änderungen unterworfen.

In Figur 2 sind zwei Funktionen 20, 22 wiedergegeben, die zwei unterschiedlichen Sondentypen entsprechen und denen entnommen werden kann, wie sich die Amplitude des Fehlersignales F in Abhängigkeit von Abstand h ändert. Neben dem Sondentyp sind weitere Parameter für den Verlauf der Funktionen 20, 22 maßgebend, nämlich u. a. Prüffrequenz, Prüfmaterial und Prüfteilgeometrie.

Ziel einer jeden Abstandskompensation ist es, die Abhängigkeit des Fehlersignals F von Abstand h in einem ausreichend großen Arbeitsbereich, der z. B. von ho bis hu reichen kann, zu beseitigen. Die dazu benötigte Abstandssonde 14 liefert ein Abstandssignal A, dessen Abhängigkeit vom Abstand h einer Funktion 24 in Figur 3 entsprechen kann, wenn man als Abstandssonde eine Wirbelstromsonde benutzt. In diesem Fall wird auch der Verlauf der Funktionen 24 von den oben schon genannten Parametern bestimmt. Bei der Verknüpfung der beiden Funktionen A = f (h) und F = f (h) zum Zwecke der Abstandskompensation muß man davon ausgehen, daß jede wesentliche Änderung eines dieser Parameter auch eine Änderung des Verlaufs der entsprechenden Funktion zur Folge haben kann, die berücksichtigt werden muß, wenn die Abstandskompensation wirksam bleiben soll. Dies ist, wie später nachgezeigt werden soll, im Rahmen der vorliegenden Erfindung besonders einfach möglich.

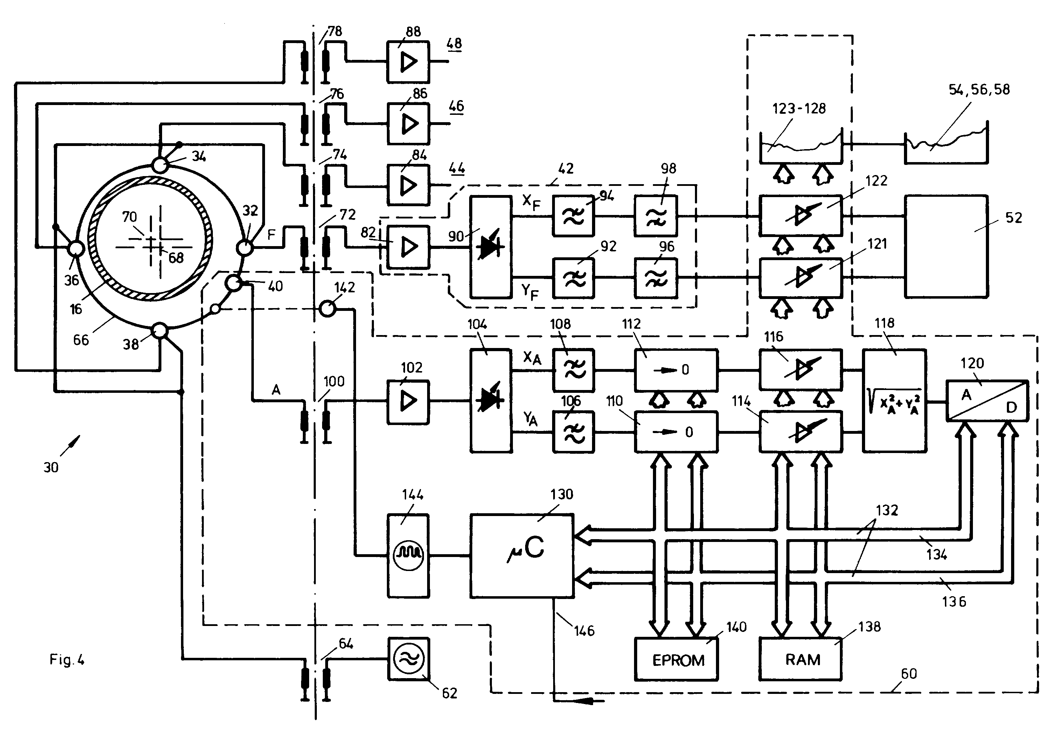

Das Blockschaltbild von Figur 4 gibt in vereinfachter Darstellung die Gesamtkonzeption eines erfindungsgemäßen Wirbelstromprüfgerätes wieder, das man grob aufteilen kann in einen Rotierkopf 30 mit Prüfsonden 32-38 und einer Abstandssonde 40, eine Reihe von Signalverarbeitungseinrichtungen 42-48, von denen nur eine (42) vollständig dargestellt ist und in denen die Fehlersignale aus den Prüfsonden 32-38 verarbeitet werden, eine entsprechende Reihe von Auswerteeinrichtungen 52-58 von denen ebenfalls nur eine abgebildet ist, und eine Abstandskompensationseinrichtung 60, in der Abstandssignale abgeleitet, aufbereitet und zur Abstandskompensation eingesetzt werden.

Die Prüfsonden 32-38 des Rotierkopfes 30 sind in vier um 90 ° gegeneinander versetzt angebrachten Prüfköpfen eingebaut. Sie werden von einem Generator 62 über einen Rotierübertrager 64 mit einem Wechselstrom gespeist. Wie in Figur 1 angedeutet können anstatt der hier verwendeten einen mehrere Prüfsonden nebeneinander im Prüfkopf enthalten sein, um eine größere Abtastbreite zu erzielen. Die Prüfsonden 32-38 beschreiben im Betrieb eine kreisförmige Umlaufbahn 66 um einen Mittelpunkt 68. Gegenüber dem letzteren ist die Achse 70 des Prüfteiles 16 verschoben, so daß sich der Abstand h zwischen Prüfteiloberfläche und Prüfsonden 32-38 periodisch nach einer Sinusfunktion ändert.

Die Fehlersignale aus den Prüfsonden 32-38 werden über Rotierübertrager 72-78 an die Eingänge von Verstärkern 82-88 geführt, die zu den Signalverarbeitungseinrichtungen 42-48 gehören. Auf die vollständige Darstellung der Signalverabeitungseinrichtungen 44-48 wurde zum einen aus Raumgründen verzichtet, zum anderen weil sie genau gleich aufgebaut sind wie Signalverabeitungseinrichtung 42. In der letzteren gelangt das Fehlersignal F aus dem Verstärker 82 an den Eingang eines gesteuerten Gleichrichters 90, in dem es in aufeinander senkrecht stehende Fehlersignalkomponenten $X_F$ und $Y_F$ zerlegt wird. Diese werden in Tiefpaßfilter 92, 94 von Störsignalen höherer Frequenz, z. B. der Trägerfrequenz, in Hochpaßfiltern 96, 98 von Störsignalen tieferer Frequenz, z. B. der Umlauffrequenz des Rotierkopfes 30 befreit.

Jeder der Signalverarbeitungseinrichtungen 42-48 ist auch eine Auswerteeinrichtung 52-58 zugeordnet. Diese können die geläufigen Auswertemittel enthalten wie Anzeige am Bildschirm und Aufzeichnung, insbesondere aber auch eine rechnergestützte Fehlersignalanalyse.

Voraussetzung für eine gute Auswertung ist, wie schon gesagt eine ausreichende Abstandskompensation in einer Kompensationseinrichtung 60. Diese stützt sich in erster Linie auf die Abstandssonde 40, die zusammen mit der Prüfsonde 32 von einem gemeinsamen Prüfkopf getragen wird. Das in ihr erzeugte Abstandssignal gelangt über einen Rotierübertrager 100 und einen Verstärker 102 an den Eingang eines gesteuerten Gleichrichters 104, wo es in zwei aufeinander senkrecht stehende Abstandssignalkomponenten $X_A$ und $Y_A$ zerlegt wird. Gesteuerte Gleichrichtung hat sich entgegen früheren Gepflogenheiten als sinnvoll und nützlich erwiesen, um sonst mögliche Verfälschungen des Abstandssignals zu vermeiden. Über Tiefpaßfilter 106, 108 werden die Signalkomponenten $X_A$, $Y_A$ an den Eingang von Nullabgleichstufen 110, 112 geführt. Diese dienen dazu, die Signalkomponenten $X_A$, $Y_A$ von Offsetspannungen zu befreien, die auf Abgleichmängeln der Abstandssonde 40 und auf Einstreuungen, insbesondere im Rotierübertrager 100 beruhen. Man ermittelt dazu bei prüfteilfreiem Rotierkopf die Offsetspannung an den Eingängen der Nullabgleichstufen 110, 112 und überlagert ihnen eine gleichgroße aber umgekehrt gepolte Kompensationsspannung. Des weiteren nehmen die Signalkomponenten $X_A$, $Y_A$ ihren Weg über Anpassungsverstärker 114, 116 und einen Betragsbilder 118 auf den Eingang eines Analog/Digital-Wandlers 120. Die beiden Anpassungsverstärker dienen lediglich dem Zweck, das Abstandssignal an den Arbeitsbereich der Abstandskompensation anzupassen. Diese Anpassung wird vorzugsweise durchgeführt mit der maximal möglichen Abstandssignalspannung, also bei einer Einstellung mit dem kleinst möglichen Abstand h = o zwischen Prüfteiloberfläche und Abstandssonde 40. Im Betragsbilder 118 wird durch analoge Rechenglieder der Rechnervorgang

$$(A) = \sqrt{X^2_A + Y^2_A}$$

durchgeführt. Die hier erhaltene analoge Größe (A) wird in ein digitales Abstandssignal umgewandelt, das zur Durchführung der Abstandskompensation, d. h. zur Steuerung einer Reihe von zwischen die Signalverabeitungseinrichtungen 42-48 und die Auswerteeinrichtungen 52-58 geschalteten digitalen Stellgliedern 121-128 benötigt wird. Dabei ist für jede Signalkomponente $X_F$, $Y_F$ der vier Signalverarbeitungseinrichtungen 42-48 ein eigenes Stellglied erforderlich, insgesamt hier also acht.

Die Abläufe der Abstandskompensation, des Nullabgleichs und der Verstärkungsanpassung werden von einem Mikrocomputer 130 geführt, der zu diesem Zweck durch einen Bus 132 mit dem A/D-Wandler 120, den Stellgliedern 121-128, den Nullabgleichstufen 110, 112 und den Anpassungsverstärkern 114, 116 verbunden ist. An den Bus 132, der über Stränge 134 und 136 Adressen bzw. Daten übermittelt, sind ferner ein erstes (138) und ein zweites (140) digitales Speicherelement angeschlossen. Das erste digitale Speicherelement 138, realisiert durch z. B. ein RAM, dient zur Abspeicherung von drei Tabellen, I, II, III, deren Aufgaben im folgenden noch erläutert werden, im zweiten digitalen Speicherelement 140, realisiert durch z. B. ein EPROM, ist das Programm für die oben genannten Abläufe abgelegt.

Tabelle II ist von der Funktion (A) = f (h) abgeleitet und führt von einer dem Wert (A) entsprechenden Adresse zu einem digitalen Hilfssignal, das dem Wert h entspricht. Tabelle III ist von der Funktion F = f (h) abgeleitet und führt mit dem zuvor genannten digitalen Hilfssignal als Adresse zu dem digitalen Multiplikator, mit dem die Fehlersignalkomponenten $X_F$ und $Y_F$ multipliziert werden müssen, um vom Abstand h unabhängig zu sein, d. h. zum gesuchten Steuersignal.

Für die Stellglieder 123-128, die zu den Prüfsonden 34, 36, 38 gehören, bedarf es zur Ermittlung des notwendigen Steuersignals noch zusätzlich der Tabelle 1, in der das Steuersignal in Abhängigkeit vom Umfangsort abgelegt ist. Hierfür ist weiterhin ein Impulsgeber 142 und ein Impulsschaltkreis 144 erforderlich, der vom Mikrocomputer 130 geführt wird und ihn mit Informationen bedient. Der Impulsgeber 142 arbeitet mit einer Lichtschranke, deren Lichtstrahl bei jedem Umlauf des Rotierkopfes 30 einmal unterbrochen wird und die dabei einen Impuls abgibt, durch den eine Folge von z. B. 360 im Impulsschaltkreis 144 generierter Umfangstaktimpulsen synchronisiert wird. Faßt man nun z. B. drei oder sechs aufeinanderfolgende Umfangstaktimpulse zu einem Abtasttaktimpuls zusammen, so ergeben sich pro Umlauf 120 bzw. 60 Abtasttakte. Damit auf die Strecke von Prüfkopf zu Prüfkopf eine ganze Zahl von Abtasttakten entfällt, muß die Zahl der Abtasttakte pro Umlauf durch die Zahl der Prüfköpfe teilbar sein, was hier in beiden Fällen zutrifft. Bei kleineren Prüfteildurchmessern oder bei geringeren Auforderungen wird man sich mit 60 Abtasttakten begnügen. Das Laden und Abfragen der Tabelle I findet jeweils innerhalb der Taktzeit eines Abtasttaktes statt. Im Verlauf jeder Taktzeit wird Tabelle I aktualisiert, indem die gerade vorliegende Information aus Tabelle III an der richtigen Stelle von Tabelle I, d. h. an der dem Umfangsort der Abstandssonde 40 entsprechenden Adresse, abgelegt wird. Dann wird jeweils mit der dem Umfangsort eines Prüfkopfes entsprechenden Adresse Tabelle I abgefragt und die zugehörigen beim vorigen Umlauf eingespeicherte Information an das dem Prüfkopf entsprechende Stellglied weitergegeben. Auf diese Weise erhalten alle Stellglieder 123-128 die für sie zutreffenden Steuersignale.

Die beschriebene Arbeitsweise mit Tabellen II und III wirkt sich sehr vorteilhaft aus, wenn es gilt, die Abstandssonde durch eine andere mit unterschiedlicher Charakteristik, oder Prüfsonden durch solche eines anderen Typs zu ersetzen oder wenn sich Charakteristiken der Sonden durch Wechsel der Parameter ändern. In diesem Fall kann Tabelle II und/oder III durch entsprechende Hilfsspeicher von außen kurzfristig und ohne Aufwand umgeladen werden. Zu diesem Zweck wie auch zum erstmaligen Laden der Tabellen ist beim Mikrocomputer 130 ein Eingang 146 für einen übergeordneten Rechner vorgesehen. Das Arbeiten mit getrennten Tabellen II und III birgt noch einen weiteren Vorteil. Das dem Abstand h unmittelbar entsprechende digitale Hilfssignal aus Tabelle II kann nach außen geführt werden und für zusätzliche Überwachungsaufgaben benutzt werden.

**Patentansprüche**

1. Verfahren zur Wirbelstromprüfung von Prüfgut mittels eines Wirbelstromprüfgerätes mit einem umlaufenden Rotierkopf (30), der mindestens zwei entlang einer Umlaufbahn (66) versetzt angebrachte Wirbelstromprüfsonden (32, 34, 36, 38) zum Abtasten von Prüfgut (16) enthaltende Prüfköpfe (10) besitzt, mit Signalverarbeitungseinrichtungen (42, 44, 46, 48), mit deren Hilfe in den Prüfsonden (32, 34, 36, 38) von Fehlern im Prüfgut (16) herrührende Fehlersignale abgeleitet werden und in denen diese Fehlersignale weiter verarbeitet werden, mit Auswerteeinrichtungen (52, 54, 56, 58), in denen die Fehlersignale ausgewertet werden, mit Abstandskompensationseinrichtungen (60), in denen die Fehlersignale bezüglich des Abstandes h zwischen Prüfsonden (32, 34, 36, 38) und Prüfgut (16) kompensiert werden, bestehend aus einer Abstandssonde (40), in der ein Abstandssignal aus dem Abstand h abgeleitet wird, aus einer Signalaufbereitungseinrichtung (102-120), in der das Abstandssignal zu einem Steuersignal aufbereitet wird und aus zwischen die Signalverarbeitungseinrichtungen (42, 44, 46, 48) und die Auswerteeinrichtungen (52, 54, 56, 58) geschalteten Stellgliedern (121-128), die die Fehlersignale in Abhängigkeit von Steuersignalen an einem Steuereingang verändern und an deren Steuereingang das aus dem Abstandssignal aufbereitete Steuersignal geführt ist, dadurch gekennzeichnet, daß nur eine Abstandssonde (40) und eine Signalaufbereitungseinrichtung (102-120) vorgesehen ist, daß die in dieser Abstandssonde (40) im Verlauf eines Umlaufs hergeleiteten Steuersignale ihrem jeweiligen Entstehungsort entlang der Umlaufbahn (Umfangsort) zugeordnet werden und zusammen mit dem Umfangsort in einer ersten Tabelle (I) abgelegt werden und daß jeweils beim Passieren eines Umfangsortes durch eine Prüfsonde (32, 34, 36, 38) das für diesen Umfangsort abgelegte Steuersignal abgerufen und zum Steuern des oder der zu den Prüfsonden (32, 34, 36, 38) des genannten Prüfkopfes (19) gehörigen Stellglieder (121-128) benutzt wird.

2. Verfahren nach Anspruch 1, dadurch gekennzeichnet, daß zum Erfassen des Umfangsortes in Abhängigkeit von der Umlauffrequenz des Rotierkopfes (30) Umfangstaktimpulse in einem Impulsschaltkreis (144) gebildet werden und daß die Umfangstaktimpulse durch mindestens einen an der Umlaufbahn angebrachten Impulsgeber (142) synchronisiert werden.

3. Verfahren nach Anspruch 2, dadurch gekennzeichnet, daß durch eine Reihe von aufeinanderfolgenden Umfangstaktimpulsen ein Abtasttaktimpuls definiert wird, der jeweils einem Umfangsort entsprechen soll und daß jeweils innerhalb der Taktzeit eines solchen Abtasttaktes das Ablegen und Abrufen von Steuersignalen erfolgen soll.

4. Verfahren nach Anspruch 3, dadurch gekennzeichnet, daß die Anzahl der Abtasttakte pro Umlauf durch die Anzahl der vorgegebenen Prüfköpfe (10) teilbar ist.

5. Verfahren nach einem der vorhergehenden Ansprüche, dadurch gekennzeichnet, daß das analoge Abstandssignal in einem A/D-Wandler (120) digitalisiert wird, daß mit dem dort gewonnenen digitalen Abstandssignal einer zweiten Tabelle (II) ein dem Abstand h unmittelbar entsprechendes digitales Hilfssignal entnommen wird, daß mit diesem digitalen Hilfssignal einer dritten Tabelle (III) ein digitales Steuersignal entnommen wird und daß dieses digitale Steuersignal in der genannten ersten Tabelle (I) zum späteren ortsgerechten Abrufen abgelegt wird.

6. Verfahren nach Anspruch 5, dadurch gekennzeichnet, daß das digitale Steuersignal direkt an die Steuereingänge der Stellglieder (121, 122) gelegt wird, bei denen der Ort der Abstandssonde (40) mit dem Ort der zu den genannten Stellgliedern (121, 122) gehörigen Prüfsonden (32) zusammenfällt.

7. Verfahren nach Anspruch 5 oder 6, dadurch gekennzeichnet, daß die genannten Tabellen (I, II, III) in einem ersten digitalen Speicherelement (138), z. B. einem RAM abgelegt sind.

8. Verfahren nach Anspruch 7, dadurch gekennzeichnet, daß A/D-Wandler (120), Stellglieder (121-128) und erster digitaler Speicherkreis (138) durch einen Bus (132) mit einem Mikrocomputer (130) verbunden sind, der den Ablauf der Abstandskompensation führt.

9. Verfahren nach Anspruch 8, dadurch gekennzeichnet, daß das Betriebsprogramm für die Steuerung des Ablaufs der Abstandskompensation in einem ebenfalls an den Bus (132) angeschlossenen zweiten digitalen Speicherelement (140) z.B. einem EPROM abgelegt ist.

10. Verfahren nach Anspruch 9, dadurch gekennzeichnet, daß auch der Impulsschaltkreis (144) durch den Mikrocomputer (130) geführt wird.

11. Verfahren nach einem der vorhergehenden Ansprüche, dadurch gekennzeichnet, daß das Abstandssignal aus der Abstandssonde (40) zunächst in einer gesteuerten Gleichrichtung (104) zu einem Vektorsignal mit zwei Komponenten ($X_A$, $Y_A$) gleichgerichtet wird, aus dem anschließend in einem Vektorbetragsbilder (118) ein Betragssignal gebildet wird.

12. Verfahren nach Anspruch 11, dadurch gekennzeichnet, daß durch Anpassungsverstärker (114, 116), die ebenfalls vom Mikrocomputer (130) geführt sind, das Betragssignal bei einem gegebenen Abstand, z.B. dem Abstand h = o, an den zu diesem Abstand gehörigen Wert der Tabelle (II) angepaßt wird.

13. Verfahren nach einem der vorhergehenden Ansprüche, dadurch gekennzeichnet, daß durch eine ebenfalls vom Mikrocomputer (130) gesteuerte Restspannungskompensation (110, 112) eine dem Abstandssignal überlagerte Restspannung eliminiert wird, indem zur Eingangsspannung der Restspannungskompensation (110, 112) eine Hilfsspannung addiert wird, die der Restspannung dem Betrag nach entspricht und das umgekehrte Vorzeichen aufweist.

14. Verfahren nach einem der vorhergehenden Ansprüche, dadurch gekennzeichnet, daß der Mikrocomputer (130) über eine Kommunikationsverbindung (146) mit einem übergeordneten Rechner verbunden wird.

15. Verfahren nach Anspruch 14, dadurch gekennzeichnet, daß die Tabellen (II, III) aus dem zweiten digitalen Speicherelement (140) oder aus dem übergeordneten Rechner geladen werden.

16. Wirbelstromprüfgerät, insbesondere zur Durchführung des Verfahrens nach einem der Ansprüche 1 bis 15, mit einem umlaufenden Rotierkopf (30), der mindestens zwei entlang einer Umlaufbahn (66) versetzt angebrachte Wirbelstromprüfsonden (32, 34, 36, 38) zum Abtasten von Prüfgut (16) enthaltende Prüfköpfe (10) besitzt, mit Signalverarbeitungseinrichtungen (42, 44, 46, 48), mit deren Hilfe in den Prüfsonden (32, 34, 36, 38) von Fehlern im Prüfgut (16) herrührende Fehlersignale abgeleitet werden und in denen diese Fehlersignale weiter verarbeitet werden, mit Auswerteeinrichtungen (52, 54, 56, 58), in denen die Fehlersignale ausgewertet werden, mit Abstandskompensationseinrichtungen (60), in denen die Fehlersignale bezüglich des Abstandes h zwischen Prüfsonden (32, 34, 36, 38) und Prüfgut (16) kompensiert werden, bestehend aus einer Abstandssonde (40), in der ein Abstandssignal aus dem Abstand h abgeleitet wird, aus einer Signalaufbereitungseinrichtung (102-120), in der das Abstandssignal zu einem Steuersignal aufbereitet wird und aus zwischen die Signalverarbeitungseinrichtungen (42, 44, 46, 48) und die Auswerteeinrichtungen (52, 54, 56, 58) geschalteten Stellgliedern (121-128), die die Fehlersignale in Abhängigkeit von Steuersignalen an einem Steuereingang verändern und an deren Steuereingang das aus dem Abstandssignal aufbereitete Steuersignal geführt ist, dadurch gekennzeichnet, daß nur eine Abstandssonde (40) und eine Signalaufbereitungseinrichtung (102-120) vorgesehen ist, daß zur Ablage einer ersten Tabelle (I) ein erstes digitales Speicherelement (138) vorgesehen ist, wobei die erste Tabelle (I) die von der Abstands' sonde (40) im Verlaufe eines Umlaufs hergeleiteten, ihrem jeweiligen Entstehungsort entlang der Umlaufbahn (Umfangsort) zugeordneten Steuersignale enthält, und daß mit dem ersten digitalen Speicherelement (138) den Prüfsonden (32, 34, 36, 38) zugeordnete digitale Stellglieder (121-128) verbunden sind, die jeweils beim Passieren eines Umfangsortes durch eine Prüfsonde (32, 34, 36, 38) des Prüfkopfes (19) durch das für diesen Umfangsort abgelegte Steuersignal steuerbar sind.

17. Wirbelstromgerät nach Anspruch 16, dadurch gekennzeichnet, daß zur Bildung von der Erfassung des Umfangsortes dienenden, von der Umlauffrequenz des Rotierkopfes (30) abhängigen Umfangstaktimpulsen ein Impulsschaltkreis (144) und zur Synchronisation der Umfangstaktimpulse mindestens ein an der Umlaufbahn angebrachter Impulsgeber (142) vorgesehen ist.

**Claims**

1. Method for the eddy current testing of test material by means of an eddy current testing device with a revolving rotary head (30), which has at least two eddy current test probes (32, 34, 36, 38) fitted in displaced manner along a circular path (66) for scanning test heads (10) containing test material (16), with signal processing devices (42, 44, 46, 48) with the aid of which in the test probes (32, 34, 36, 38) can be derived fault signals emanating from faults in the test material and in which said fault signals are further processed, with evaluating devices (52, 54, 56, 58), in which the fault signals are evaluated, with distance compensating devices (60), in which the fault signals are compensated with respect to the distance h between the test probes (32, 34, 36, 38) and test material (16), comprising a distance probe (40), in which a distance signal is derived from the distance h, a signal conditioning device (102-120) in which the distance signal is conditioned to a control signal and correcting devices (121-128) connected between the signal processing devices (42, 44, 46, 48) and the evaluating devices (52, 54, 56, 58) and which modify the fault signals as a function of control signals at a control input and to whose control input is passed the control signal conditioned from the distance signal, characterized in that there is only one distance probe (40) and one signal conditioning device (102-120), that the control signals derived during a revolution in said distance probe (40) are associated with the particular formation point thereof along a circular path (circumference location) and are filed together with the circumferential location in a first table (I) and that in each case on passing a circumference location by a test probe (32, 34, 36, 38) the control signal filed for this circumference location is polled and used for controlling the correcting devices (121-128) belonging to the test probes (32, 34, 36, 38) of said test head (19).

2. Method according to claim 1, characterized in that for determining the circumference location as a function of the rotational frequency of the rotary head (30) circumference clock pulses are formed in a pulse circuit (144) and that the circumference clock pulses are synchronized by at least one pulse generator (142) fitted to the circular path.

3. Method according to claim 2, characterized in that by means of a row of successive circumference clock pulses a scanning clock pulse is defined, which in each case corresponds to a circumference location and that within the cycle time of such a scanning cycle the filing and polling of control signals take place.

4. Method according to claim 3, characterized in that the number of scanning cycles per revolution can be divided by the number of predetermined test heads (10).

5. Method according to one of the preceding claims, characterized in that the analog distance signal is digitized in an A/D converter (120), that with the digital distance signal obtained there from a second table (II) is removed a digital auxiliary signal directly corresponding to the distance h, that with said digital auxiliary signal from a third table (III) is removed a digital control signal and that said digital control signal is filed in said first table (I) for subsequent, correct place polling.

6. Method according to claim 5, characterized in that the digital control signal is directly applied to the control inputs of the correcting devices (121, 122), where the location of the distance probe (40) coincides with the location of the test probes (32) belonging to said correcting devices (121, 122).

7. Method according to claim 5 or 6, characterized in that the said tables (I, II, III) are filed in a first digital storage element (138), e.g. an RAM.

8. Method according to claim 7, characterized in that A/D converters (120), correcting devices (121-128) and first digital memory circuit (138) are connected by a bus (132) to a microcomputer (130), which controls the sequence of the distance compensation.

9. Method according to claim 8, characterized in that the operating program for the control of the sequence of the distance compensation is filed in a second digital storage element (140), e.g. an EPROM also connected to the bus (132).

10. Method according to claim 9, characterized in that the pulse circuit (144) is also controlled by the microcomputer (130).

11. Method according to one of the preceding claims, characterized in that the distance signal from the distance probe (40) is initially rectified in a control rectifier (104) to a vector signal with two components ($X_A$, $Y_A$) from which subsquently a modular signal is formed in a vector modulus forming means (118).

12. Method according to claim 11, characterized in that by adaptor amplifiers (114, 116), which are also controlled by the microcomputer (130), the modulus signal for a given distance, i.e. the distance h = 0, is adapted to the value of table (II) associated with this distance.

13. Method according to one of the preceding claims, characterized in that by a residual voltage compensation means (110, 112) also controlled by the microcomputer (130) is eliminated a residual voltage superimposed on the distance signal, in that to the input voltage of the residual voltage compensating means (110, 112) is added an auxiliary voltage, which corresponds as regards amount to the residual voltage, but has the opposite sign.

14. Method according to one of the preceding claims, characterized in that the microcomputer (130) is connected by a communication connection (146) to a master computer.

15. Method according to claim 14, characterized in that the tables (II, III) are loaded from the second digital storage element (140) or the master computer.

16. Eddy current testing device, particularly for performing the method according to one of the claims 1 to 15, with a revolving rotary head (30), which has at least two eddy current test probes (32, 34, 36, 38) fitted in displaced manner along a circular path (66) for scanning test heads (10) containing test material (16), with signal processing devices (42, 44, 46, 48) with the aid of which in the test probes (32, 34, 36, 38) are derived fault signals emanating from faults in the test material (16) and in which said fault signals are further processed, with evaluating devices (52, 54, 56, 58) in which the fault signals are evaluated, with distance compensating devices (60) in which the fault signals are compensated with respect to the distance h between the test probes (32, 34, 36, 38) and the test material (16), comprising a distance probe (40), in which a distance signal is derived from the distance h, a signal conditioning device (102-120), in which the distance signal is conditioned to a control signal and adjusting devices (121-128) connected between the signal processing devices (42, 44, 46, 48) and the evaluating devices (52, 54, 56, 58) and which modify the fault signals as a function of control signals at a control input and to whose control input is passed the control signal conditioned from the distance signal, characterized in that there is only one distance probe (40) and one signal conditioning device (102-120), that for filing a first table (I) a first digital storage element (138) is provided, the first table (I) containing the control signals derived from the distance probe (40) during a revolution and associated with the particular formation location along the circular path (circumference location) and that to the first digital storage element (138) are connected digital adjusting devices (121-128) associated with the test probes (32, 34, 36, 38) and which on passing a circumference location are controllable by a test probe (32, 34, 36, 38) of the test head (19) through the control signal filed for this circumference location.

17. Eddy current testing device according to claim 16, characterized in that for forming circumference clock pulses used for determining the circumference location and dependent on the rotational frequency of the rotary head (30) are provided a pulse circuit (144) and for the synchronization of the circumference clock pulses at least one pulse generator (142) fitted to the circular path.

## Revendications

1. Procédé de contrôle par courants de Foucault de pièces à contrôler à l'aide d'un appareil de contrôle par courants de Foucault comportant une tête (30) tournant suivant une orbite, qui possède au moins deux têtes de contrôle (10) disposées en quinconce le long d'une trajectoire orbitale (66), contenant des sondes de contrôle par courants de Foucault (32, 34, 36, 38) pour le balayage de pièces à contrôler (16), des dispositifs de traitement de signaux (42, 44, 46, 48), à l'aide desquels on dérive des signaux d'erreurs provoqués par des défauts dans les pièces à contrôler (16) et dans lesquels ces signaux d'erreurs subissent un traitement complémentaire, des dispositifs d'évaluation (52, 54, 56, 58), dans lesquels les signaux d'erreurs sont exploités, des dispositifs de compensation de distance (60), dans lesquels on compense les signaux d'erreurs pour tenir compte de la distance h entre les sondes de contrôle (32, 34, 36, 38) et les pièces à contrôler (16), composés d'une sonde de distance (40), dans laquelle on dérive un signal de distance à partir de la distance h, d'un dispositif de traitement des signaux (102-120), dans lequel on transforme le signal de distance en un signal de commande, et d'éléments de positionnement (121-128), placés entre les dispositifs de traitement de signaux (42, 44, 46, 48) et les dispositifs d'évaluation (52, 54, 56, 58), qui modifient les signaux d'erreurs en fonction de signaux de commande appliqués à une entrée de commande, et à l'entrée de commande desquels on applique le signal de commande obtenu à partir du signal de distance, caractérisé en ce qu'on ne prévoit qu'une seule sonde de distance (40) et un seul dispositif de traitement des signaux (102-120), en ce que les signaux de commande dérivés dans cette sonde de distance (40) au cours d'une révolution sont attribués à leur lieu de naissance correspondant le long de la trajectoire orbitale (point orbital) et sont stockés en même temps que le point orbital dans un premier tableau (I), et en ce que, lors de chaque passage d'une sonde de contrôle (32, 34, 36, 38) en un point orbital, on appelle le signal de commande stocké pour ce point orbital et on l'emploie pour commander l'élément ou les éléments de positionnement (121-128) correspondant aux sondes de contrôle (32, 34, 36, 38) de ladite tête de contrôle (19).

2. Procédé suivant la revendication 1, caractérisé en ce que, pour la détermination du point orbital en fonction de la fréquence de révolution de la tête tournante (30), on construit des impulsions de synchronisation orbitale dans un circuit de commutation d'impulsions (144), et en ce qu'on synchronise les impulsions de synchronisation orbitales à l'aide d'au moins un contacteur (142) placé sur la trajectoire orbitale.

3. Procédé suivant la revendication 2, caractérisé en ce que, à l'aide d'une série d'impulsions de synchronisation orbitale, on définit des impulsions de balayage devant chacune correspondre à un point orbital, et en ce que l'émission et l'appel de signaux de commande doit chaque fois avoir lieu durant le temps de cycle d'une telle impulsion de balayage.

4. Procédé suivant la revendication 3, caractérisé en ce que le nombre d'impulsions de balayage par révolution est divisible par le nombre de têtes de contrôle (10) existantes.

5. Procédé suivant l'une des revendications précédentes, caractérisé en ce que le signal analogique de distance est numérisé dans un convertisseur A/D (120), en ce qu'avec le signal numérique de distance ainsi obtenu on prélève dans un deuxième tableau (II) un signal numérique auxiliaire correspondant directement à la distance h, en ce qu'avec ce signal numérique auxiliaire on prélève dans un troisième tableau (III) un signal numérique de commande et en ce qu'on dépose ce signal numérique de commande dans le premier tableau (I) cité pour le rappeler plus tard en fonction de l'endroit considéré.

6. Procédé suivant la revendication 5, caractérisé en ce qu'on amène le signal numérique de commande directement aux entrées de commande des éléments de positionnement (121, 122), pour lesquels l'emplacement de la sonde de distance (40) coïncide avec l'emplacement des sondes de contrôle (32) correspondant aux éléments de positionnement (121, 122) cités.

7. Procédé suivant la revendication 5 ou 6, caractérisé en ce qu'on stocke les tableaux cités (I, II, III) dans un premier circuit numérique de stockage (138), p. ex. une RAM.

8. Procédé suivant la revendication 7, caractérisé en ce que le convertisseur A/D (120), les éléments de positionnement (121-128) et le premier circuit numérique de stockage (138) sont reliés par un bus (132) à un micro-ordinateur (130), qui commande le déroulement de la compensation de distance.

9. Procédé suivant la revendication 8, caractérisé en ce que le programme d'exploitation pour la commande du déroulement de la compensation de distance est stocké dans un deuxième circuit numérique de stockage (140), p.ex. un EPROM, qui est également raccordé au bus (132).

10. Procédé suivant la revendication 9, caractérisé en ce que le circuit de commutation d'impulsion (144) est également commandé par le micro-ordinateur (130).

11. Procédé suivant l'une des revendications précédentes, caractérisé en ce que le signal de distance de la sonde de distance (40) est d'abord redressé dans un redresseur commandé (104) en un signal vectoriel à deux composantes ($X_A$, $Y_A$), à partir duquel on construit ensuite un signal d'amplitude dans un générateur d'amplitude de vecteur (118).

12. Procédé suivant la revendication 11, caractérisé en ce que, pour une distance donnée, p.ex. la distance h = 0, on adapte le signal d'amplitude à la valeur du tableau (II) correspondant à cette distance à l'aide d'amplificateurs d'adaptation (114, 116), qui sont également commandés par le micro-ordinateur (130).

13. Procédé suivant l'une des revendications précédentes, caractérisé en ce que, à l'aide d'une compensation de tension résiduelle (110, 112) également commandée par le micro-ordinateur (130), on élimine une tension résiduelle superposée au signal de distance, en ceci qu'on ajoute à la tension d'entrée de la compensation de tension résiduelle (110, 112) une tension auxiliaire qui correspond en amplitude à la tension résiduelle et qui est de signe opposé.

14. Procédé suivant l'une des revendications précédentes, caractérisé en ce que le micro-ordinateur (130) est relié à un ordinateur central par l'intermédiaire d'une liaison de communication (146).

15. Procédé suivant la revendication 14, caractérisé en ce qu'on charge les tableaux (II, III) depuis le deuxième circuit numérique de stockage (140) ou depuis l'ordinateur central.

16. Appareil de contrôle par courants de Faucault, en particulier pour la mise en oeuvre du procédé suivant l'une des revendications 1-15, comportant une tête (30) tournant suivant une orbite, qui possède au moins deux têtes de contrôle (10) disposées en quinconce le long d'une trajectoire orbitale (66), contenant des sondes de contrôle par courants de Foucault (32, 34, 36, 38) pour le balayage de pièces à contrôler (16), des dispositifs de traitement de signaux (42, 44, 46, 48), à l'aide desquels on dérive des signaux d'erreurs provoqués par des défauts dans les pièces à contrôler (16) et dans lesquels ces signaux d'erreurs subissent un traitement complémentaire, des dispositifs d'évaluation (52, 54, 56, 58), dans lesquels les signaux d'erreurs sont exploités, des dispositifs de compensation de distance (60), dans lesquels on compense les signaux d'erreurs pour tenir compte de la distance h entre les sondes de contrôle (32, 34, 36, 38) et les pièces à contrôler (16), composés d'une sonde de distance (40), dans laquelle on dérive un signal de distance à partir de la distance h, d'un dispositif de traitement des signaux (102-120), dans lequel on transforme le signal de distance en un signal de commande, et d'éléments de positionnement (121-128), placés entre les dispositifs de traitement de signaux (42, 44, 46, 48) et les dispositifs d'évaluation (52, 54, 56, 58), qui modifient les signaux d'erreurs en fonction de signaux de commande appliqués à une entrée de commande, et à l'entrée de commande desquels on applique le signal de commande obtenu à partir du signal de distance, caractérisé en ce qu'on ne prévoit qu'une seule sonde de distance (40) et un seul dispositif de traitement des signaux (102-120), en ce qu'on prévoit un premier circuit numérique de stockage (138) pour le stockage d'un premier tableau (I), le premier tableau (I) contenant les signaux de commande dérivés de la sonde de distance (40) au cours d'une révolution, attribués à leurs lieux de naissance respectifs le long de la trajectoire orbitale (points orbitaux), et en ce que des éléments numériques de positionnement (121-128) correspondant aux sondes de contrôle (32, 34, 36, 38) sont reliés au premier circuit numérique de stockage (138), lesquels peuvent être actionnés par le signal de commande stocké pour un point orbital lors du passage d'une sonde de contrôle (32, 34, 36, 38) de la tête de contrôle (19) en ce point orbital.

17. Appareil de contrôle par courants de Foucault suivant la revendication 16, caractérisé en ce qu'un circuit de commutation d'impulsion (144) est prévu pour la génération des impulsions dépendant de la fréquence de rotation de la tête tournante (30), servant à la détermination du point orbital, et en ce qu'au moins un générateur d'impulsions (142) est placé sur la trajectoire orbitale pour la synchronisation des impulsions de synchronisation orbitale.

Fig. 1

Fig. 2

Fig. 3

Fig. 4